# FASCICULE DE BREVET EUROPEEN

(11) **EP 3 145 692 B1**
(45) Date de publication et mention de la délivrance du brevet: **18.07.2018**
(21) Numéro de dépôt: 15728910.9
(22) Date de dépôt: 18.05.2015
(51) Int. Cl.: B29C 49/54, B29C 49/48, B29C 49/06

(54) **MOULE POUR BOUTEILLE CLIPSABLE**
FORM FÜR EINE CLIPBARE FLASCHE
MOULD FOR A CLIPPABLE BOTTLE

(30) Priorité: 19.05.2014 FR 1454447
(43) Date de publication de la demande: 29.03.2017
(73) Titulaire: BTC Concept, 75001 Paris (FR)
(72) Inventeur: BOU-MEZRAG, Mohammed Seiffeddine, F-92390 Villeneuve La Garenne (FR); BASSING, Yann-Loïg, F-94800 Villejuif (FR)
(74) Mandataire: Oudin, Stéphane
(86) Numéro de dépôt international: PCT/FR2015/051283
(87) Numéro de publication internationale: WO 2015/177443

(56) Documents cités:
- EP-A1- 1 321 370
- EP-A2- 1 163 996
- US-A- 4 414 175
- US-A1- 2006 096 942
- US-A1- 2014 027 336

## Description

### Domaine technique

L'invention est du domaine du moulage par soufflage exploitant une préforme, pour fabriquer un conteneur à goulot comportant une contre-dépouille. Le conteneur est plus particulièrement un module d'un récipient composé d'une pluralité de tels conteneurs, qui sont agencés pour leur jonction axiale l'un à l'autre avec mise en coopération entre le fond d'un conteneur et le goulot d'un autre conteneur axialement voisin. L'invention a notamment pour objet un moule pour la fabrication par soufflage d'une préforme pour l'obtention d'un tel conteneur comportant une contre-dépouille ménagée dans son fond, le procédé de fabrication mettant en oeuvre ledit moule et un récipient composé d'une pluralité de conteneurs fabriqués à partir de la mise en oeuvre de ce procédé.

### Technique antérieure

Parmi les conteneurs, on connaît les conteneurs à goulot qui sont agencés en bouteille ou analogue et qui sont destinés à contenir des produits liquides, boissons notamment. De tels conteneurs comportent à leur extrémité proximale un goulot de conformation tubulaire, qui est muni de moyens de jonction facilement réversible, par vissage notamment, avec un bouchon amovible. Le goulot est prolongé vers l'extrémité distale du conteneur par un col évasé, puis axialement par un corps qui est fermé à sa base par un fond ménagé à son extrémité distale.

Il est courant de former de tels conteneurs par soufflage en exploitant une préforme installée à l'intérieur d'un moule. Cette technique de moulage est avantageuse pour obtenir des conteneurs à paroi fine à moindres coûts et à cadences de production élevées. Le moule est principalement composé d'au moins deux coquilles latérales et d'un fond. Les coquilles sont mobiles latéralement pour l'ouverture et la fermeture du moule, et comportent à leur sommet un organe de prise d'une collerette dont est munie la préforme pour son maintien à l'intérieur du moule pendant l'opération de soufflage. Le fond du moule est susceptible d'être axialement mobile pour former la cavité ouverte que comporte le fond du conteneur.

Il a été proposé des récipients composés d'une pluralité de conteneurs à goulot pouvant être assemblés axialement avec une mise en coopération entre le fond d'un conteneur supérieur et le goulot d'un conteneur inférieur. Le fond du conteneur supérieur comporte une cavité qui loge le goulot prolongé du col évasé du conteneur inférieur, cette cavité comprenant un espace tubulaire de réception dudit goulot qui est prolongé par une poche évasée. L'assemblage entre le conteneur supérieur et le conteneur inférieur est obtenu par une mise en coopération entre des organes d'emboîtement axial coopérant que comportent respectivement les conteneurs. En position d'assemblage des conteneurs, un organe d'emboîtement du conteneur inférieur est encastré à l'intérieur d'un organe d'emboîtement de forme complémentaire que comporte le conteneur supérieur. Cet encastrement est obtenu par déformation élastique de l'un et/ou l'autre des organes d'emboîtement, et interdit une séparation spontanée des conteneurs sous l'effet du poids du conteneur inférieur, notamment lorsque le récipient est porté par l'intermédiaire du conteneur supérieur. Pour assembler ou séparer les conteneurs, l'opérateur exerce un effort pour provoquer une déformation de l'un et/ou de l'autre des organes d'emboîtement et leur mise en coopération ou inversement leur désolidarisation.

Les déposants ont mis au point (figures 1 et 2) un récipient modulaire (décrit dans WO2012104499A2) composé de conteneurs à goulot comportant des modalités d'emboîtement axial les uns aux autres par mise en coopération entre leur fond et leur goulot. Cet emboîtement axial entre les conteneurs peut être obtenu à moindres coûts et à cadences élevées par soufflage d'une préforme en matériau thermoplastique, malgré la finesse de leur paroi souhaitée la plus mince possible par économie de matière, et malgré la présence d'une contre-dépouille utile à la formation d'un organe d'emboîtement que comporte les conteneurs.

Plus particulièrement, ledit récipient modulaire est composé d'une pluralité de conteneurs 1 à goulot emboîtables axialement successivement les uns aux autres avec mise en coopération entre leur fond 2 et leur goulot 3 prolongé d'un col évasé 4, les conteneurs 1 comportant des organes d'emboîtement axial 11,12,16,17 avec un conteneur voisin, dont au moins l'un est agencé en collerette 11 ménagée autour du goulot 3 d'un conteneur 1 et dont au moins un autre est agencé en évidement de réception de la collerette 11, évidement que comprend une cavité 8 ouverte sur l'extérieur qui est ménagée dans le fond 2 des conteneurs 1 et qui comporte un espace tubulaire borgne 9 de réception d'un goulot 3 prolongé par une poche évasée 10 de réception du col évasé 4 prolongeant ce goulot 3, l'évidement est formé par l'espace tubulaire 9 qui est ménagé en contre-dépouille dans le fond 2 du conteneur 1, cet espace tubulaire ménageant une chambre 9 de réception de la collerette 11 en liberté radiale et en prise axiale monodirectionnelle contre un épaulement 12 formé à la base de la chambre 9 opposée à sa face borgne 15.

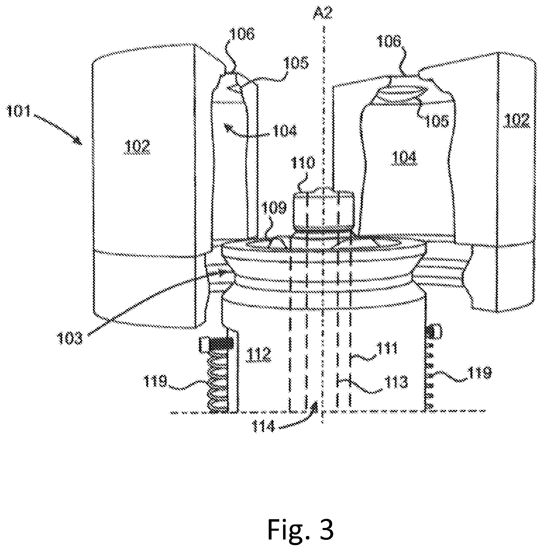

Il existe dans l'art antérieur un procédé de fabrication (WO2012104499A2) par moulage de ce dernier conteneur à contre-dépouille par soufflage d'une préforme, dont la mise en oeuvre est compatible avec l'obtention d'un conteneur à paroi fine qui est organisé pour permettre son emboîtement axial fiable et confortable avec un conteneur analogue pour composer le récipient modulaire. Ce procédé de fabrication met en oeuvre un moule tel que présenté aux figures 3-5.

Ce moule 101 comporte des coquilles 102 qui sont montées mobiles latéralement autour d'un axe A2 d'orientation générale du moule 101 en correspondance avec l'axe (A1) d'extension générale du conteneur 1 à obtenir, et une base 103 qui est montée mobile axialement suivant cet axe A2 d'orientation générale du moule 101. Les coquilles 102 comportent chacune une empreinte en creux 104 délitant une demi-paroi du conteneur 1 à obtenir. Des alvéoles 105 pour le moulage des bossages 17 sur le col évasé 4 des conteneurs 1 à obtenir, sont ménagées dans la zone correspondante au sommet de ces empreintes en creux 104. Les coquilles 102 comportent à leur sommet une feuillure 106 ou organe analogue de prise et de maintien d'une préforme à l'intérieur du moule 101, par l'intermédiaire d'un anneau que comporte la préforme à cet effet. La base 103 est dotée de moyens de formation de la cavité 8 dans le fond 2 du conteneur 1 à obtenir, qui associent une empreinte en relief formant une paroi de moulage 109 de la poche évasée 10 et des alvéoles 16 de réception des bossages 17, avec une tête 110 radialement expansible de moulage de la chambre 9 en contre-dépouille. La tête 110 radialement expansible émerge axialement hors de la paroi de moulage 109, et est un composant d'un organe rétractable 111 qui est monté conjointement avec la base 103 sur un châssis 112 commun.

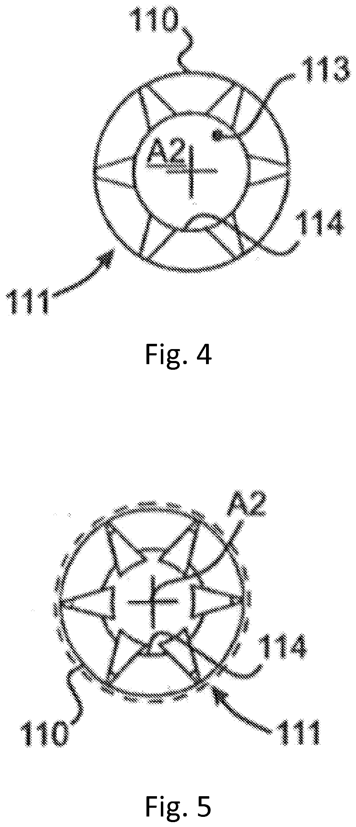

L'organe rétractable 111, et plus particulièrement la tête 110 qu'il comporte, est manoeuvrable par un piston 113 à partir d'un déplacement relatif entre l'organe rétractable 111 et le piston 113. L'organe rétractable 111 est agencé en tube qui est monté sur un châssis 112 en étant orienté suivant l'axe A2 d'orientation générale du moule 101 et en traversant axialement la base 103. L'agencement en tube de l'organe rétractable 111 ménage un canal 114 axial de circulation du piston 113, pour provoquer son passage entre ses positions escamotée et déployée. En position escamotée de l'organe rétractable 111, la tête 110 expansible est rétractée en une position de démoulage tel qu'illustré sur la fig.4 ; en position déployée de l'organe rétractable 111, la tête 110 est expansée en étant axialement traversée par le piston 113 en une position de moulage, tel qu'illustré sur la fig.5. Le piston 113 est porté par un socle déplaçable par des moyens de manoeuvre motorisés, tel qu'un vérin électrique ou organe moteur analogue. Ces moyens de manoeuvre motorisés sont exploités pour mouvoir la base 103 entre les positions d'ouverture et de fermeture du moule 101, et plus particulièrement pour mouvoir l'ensemble mobile 120 composé du socle porteur du châssis 112, lui-même porteur de la base 103 et de l'organe rétractable 111 qui la traverse axialement. Le socle est muni de colonnes de guidage axial du châssis 112 porteur de la base 103 et de l'organe rétractable 111, qui coopèrent avec des douilles ménagées dans le châssis 112. Des moyens de rappel 119 déformables sont interposés entre le châssis 112 et le socle, sur lesquels ils sont en prises antagonistes. De tels moyens de rappel 119 sont susceptibles d'être constitués de ressorts, de vérins pneumatiques ou de tout autre organe de retenue à l'encontre d'un déplacement relatif entre le châssis 112 et le socle au-delà d'un seuil de contrainte prédéterminé.

Ce type de moule, bien que parfaitement efficace, présente un encombrement axial particulièrement important qui ne facilite pas son insertion dans une chaîne de soufflage classique.

Par ailleurs, le procédé mettant en oeuvre ce moule ne permet pas d'atteindre des cadencements équivalents à ceux obtenus avec les procédés de moulage des conteneurs classiques.

Les documents EP1321370A1, EP1163996A2 et US4414175A sont repésentatifs de l'arrière plan techonologique et décrivent des bases pour moule selon l'art antérieur.

### Résumé de l'invention

Ainsi la présente invention concerne notamment une base pour moule, pour conteneur clipsable, comprenant sur sa face supérieure une paroi de moulage, du fond du conteneur à obtenir, dont émerge une tête s'étendant selon un axe longitudinal A2, ladite tête comprend une surface périphérique comprenant au moins une ouverture borgne, remarquable en ce que la portion de ladite surface périphérique à l'aplomb de ladite ouverture borgne est mobile entre une position avancée, où ladite portion est alignée avec le reste de ladite surface périphérique, et une position arrière où ladite portion est disposée en retrait de l'axe parallèle à l'axe A2 et passant par le fond de ladite ouverture borgne.

Dans le cadre de la présente invention, le terme « disposée en retrait de l'axe parallèle à l'axe A2 passant par le fond de ladite ouverture borgne » entend signifier que ladite portion de paroi est disposée entre l'axe A2 et l'axe parallèle à l'axe A2 passant par le fond de ladite ouverture borgne.

La présence d'une ou plusieurs ouvertures borgnes permet la création des épaulements responsable du clipsage du conteneur. L'existence desdites portions mobiles à l'aplomb de ces ouvertures permet le retrait axial du conteneur moulé sans que les épaulements soient retenus à l'intérieur desdites ouvertures.

Selon un mode de réalisation préféré, ladite tête a une forme cylindrique ou tronconique comprenant une surface périphérique et une face supérieure.

Selon un mode de réalisation préféré, ladite tête comprend au moins deux ouvertures borgnes, disposées selon un même plan perpendiculaire à l'axe A2, placées en vis-à-vis, à la base de ladite tête.

Selon un mode de réalisation préféré, ladite tête est creuse et contient tout ou partie d'un noyau central, mobile en translation parallèlement à l'axe A2, entre une position haute et une position basse, disposée de telle sorte que le mouvement dudit noyau central de la position haute à la position basse entraîne le déplacement de ladite portion à l'aplomb de ladite ouverture borgne de la position avancée à la position arrière.

Selon un mode de réalisation préféré, ledit noyau central et la surface interne de ladite portion mobile présente chacune un pan incliné en direction de l'extérieur de ladite base, par rapport à l'axe A2, en contact l'une avec l'autre et associées par une première liaison glissière

Selon un mode de réalisation tout à fait préféré, ladite première liaison glissière est réalisée par un assemblage en queue d'aronde.

Selon un mode de réalisation préféré, ledit noyau central s'étend en deçà de la base de ladite tête à l'intérieur d'un canal.

Selon un mode de réalisation préféré, ladite base comprend un bouton poussoir, mobile en translation en direction de l'axe A2, associé audit noyau central de telle sorte que le déplacement dudit bouton poussoir en direction de l'axe A2 entraine le déplacement dudit noyau central en position haute.

Selon un mode de réalisation encore plus préféré, ledit bouton poussoir et ledit noyau central sont associés par une deuxième liaison glissière.

Selon un mode de réalisation tout à fait préféré, ladite deuxième liaison glissière est réalisée via au moins une ligne de guidage inclinée, par rapport au plan perpendiculaire à l'axe A2, en direction dudit axe A2.

Selon un mode de réalisation préféré, ledit noyau central présente des ailes s'étendant vers l'extérieur dudit canal, lesdites ailes étant associées par ladite liaison glissière audit bouton poussoir.

La présence de ce bouton poussoir entrainant le noyau central permet d'obtenir une base particulièrement compacte, s'étendant peu dans l'axe par rapport au dispositif de moulage de l'art antérieur. Ceci permet d'intégrer la base selon l'invention dans les chaînes de soufflages classique sans modifications.

Selon un mode de réalisation préféré, l'extrémité libre dudit bouton poussoir déborde de la périphérie du reste de ladite base

L'invention concerne également un moule comprenant une base selon l'une des revendications précédentes et des coquilles montées mobiles latéralement autour dudit axe A2, entre une position ouverte et une position fermée, lesdites coquilles comportant chacune une empreinte en creux délimitant une partie de la paroi du conteneur à obtenir, caractérisée en ce qu'en position fermée lesdites coquilles prennent appui sur ledit bouton poussoir.

Selon un mode de réalisation préféré, ledit moule comprend deux coquilles montées pivotantes l'une par rapport à l'autre.

### Brève description des dessins

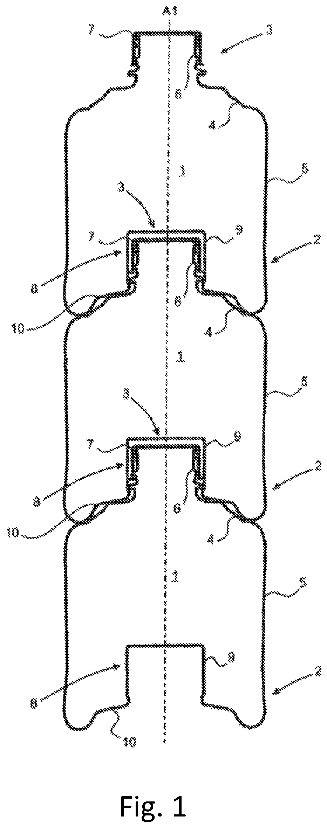

- La fig.1 est une illustration en coupe axiale d'un récipient modulaire composé d'une pluralité de conteneurs axialement assemblés en eux par emboîtement de l'art antérieur.

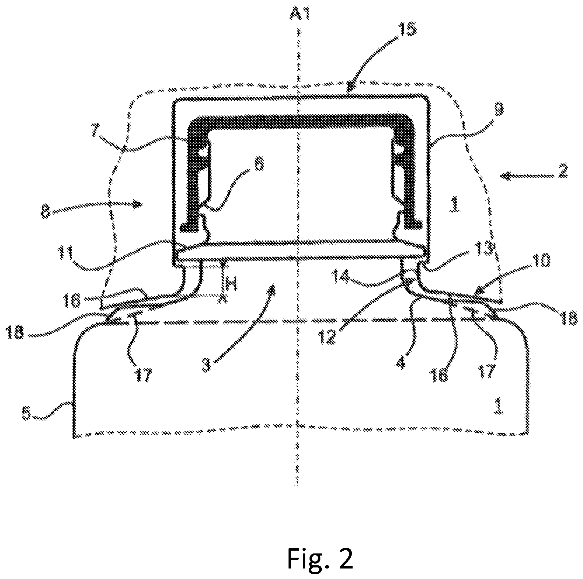

- La fig.2 est un détail du récipient représenté sur la fig.1, illustrant la mise en coopération entre le fond d'un conteneur et le goulot d'un conteneur voisin.
- La fig.3 est une illustration en perspective d'un moule, de l'art antérieur, exploité pour former par soufflage d'une préforme un conteneur représenté sur les fig.1 à fig.2.
- Les fig.4 et fig.5 sont des illustrations en coupe transversales d'une tête expansible de moulage respectivement en position rétractée et en position expansée, pour la formation d'une chambre annulaire en contre-dépouille que comporte un conteneur représenté sur les fig.1 et 2.
- La figure 6 présente une vue en perspective d'un mode de réalisation d'un moule selon l'invention.
- La figure 7 présente une vue en perspective de la base du mode de réalisation présenté à la figure 6.
- La figure 8 présente une vue en perspective de l'association entre le noyau central, le châssis, le bouton poussoir et les portions mobiles d'un mode de réalisation d'une base selon l'invention.
- Les figures 9a et 9b présentent une vue en coupe d'un mode de réalisation d'un moule selon l'invention avec les coquilles en position ouverte (9a) et fermée (9b).

### Description des modes de réalisation

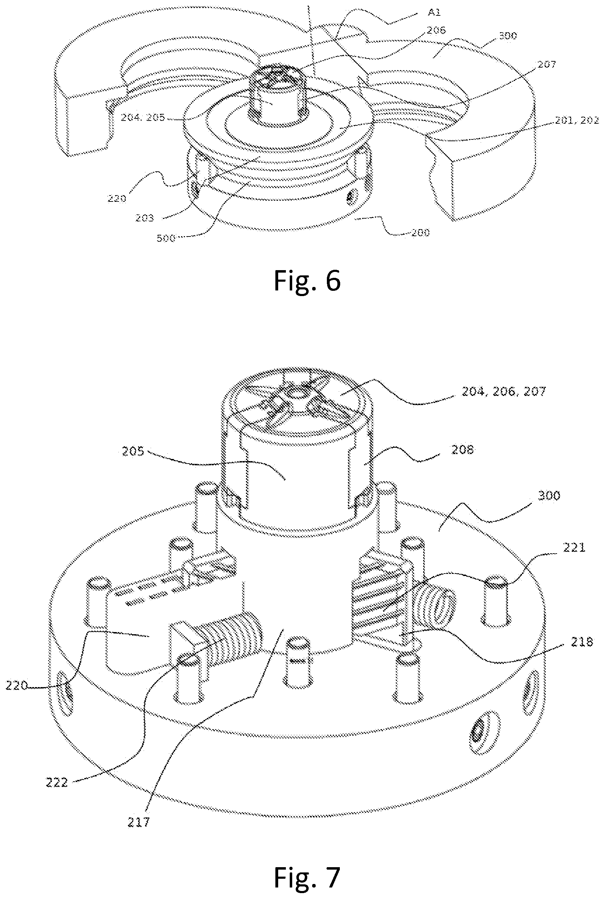

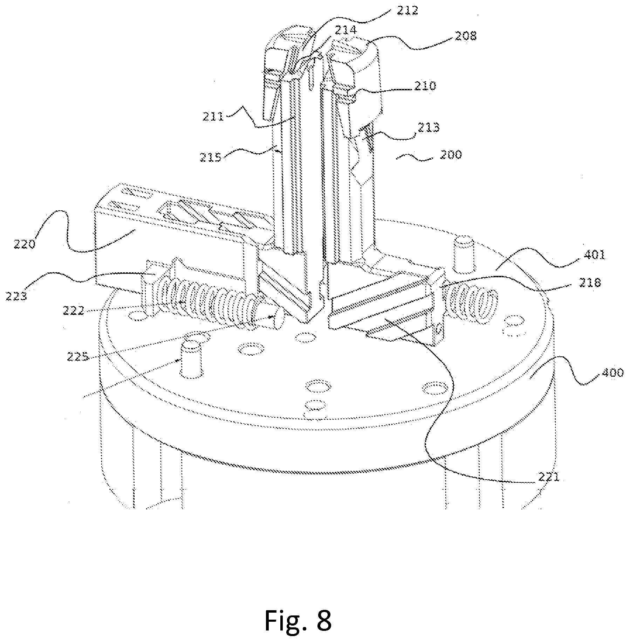

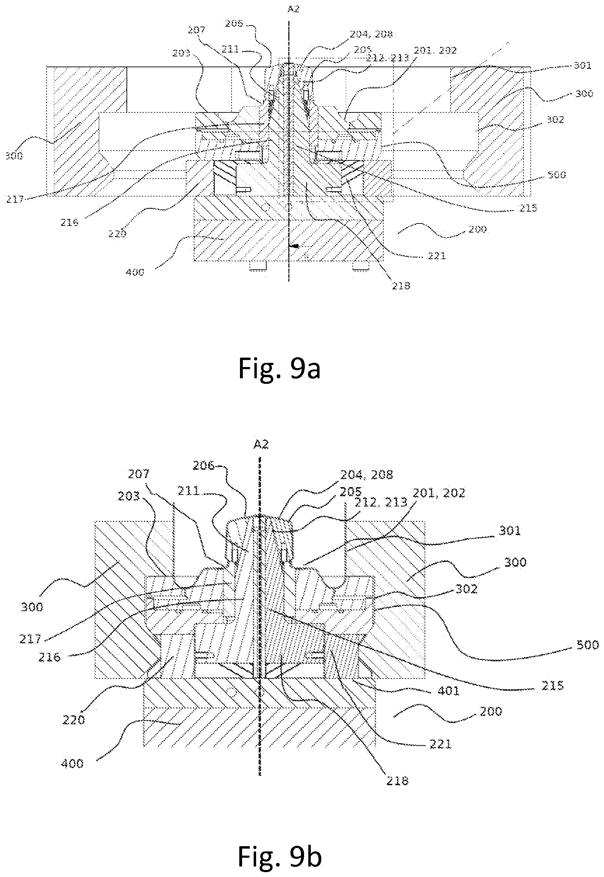

En référence aux figures 6-9, le moule selon l'invention comprend une base 200 comprenant sur sa face supérieure 201 une paroi de moulage 202 formant l'empreinte en creux de tout ou partie du fond du conteneur à obtenir. Préférentiellement, ladite face supérieure 201 est circulaire et comprend successivement, de sa périphérie vers son centre, une zone annulaire plane 203, apte à recevoir les coquilles 300 comprenant l'empreinte du reste du conteneur à obtenir, puis la paroi de moulage 202 et la tête 204 destinée au moulage de la chambre 9.

La paroi de moulage 202 et la tête 204 peuvent être co-moulées ou assemblées de façon permanente. Toutefois, la tête 204 peut avantageusement constituer une pièce distincte venant s'insérer dans une ouverture placée au centre de la paroi de moulage 202. Dans ce dernier cas, l'association entre la paroi de moulage 202 et la tête 204 peut être réalisée par la fixation de ces deux pièces sur un châssis 400.

Le châssis 400 a préférentiellement une forme cylindrique comprenant une face supérieure 401 plane sur laquelle vont venir se fixer les différents éléments de la base 200 (paroi de moulage 202, tête 204, etc). Par ailleurs, une coque périphérique 500 peut être avantageusement utilisée pour isoler l'espace entre ledit châssis 400 et ladite surface supérieure 201 de son environnement.

La tête 204, placée au centre de la face supérieure 201 s'étend depuis la paroi de moulage 202 selon un axe longitudinal A2 qui est également l'axe d'orientation générale du moule selon l'invention et du conteneur à obtenir. Cette tête 204 est de forme préférentiellement cylindrique ou tronconique, dont l'axe de révolution est l'axe A2, comprenant une surface périphérique 205 et une face supérieure 206. La face supérieure 206 peut avantageusement comprendre des empreintes destinées à former des nervures dans le fond du conteneur à mouler.

La tête 204 comprend sur sa surface périphérique au moins une ouverture borgne 207 destinée à former un épaulement 12 ménagé dans la chambre 9 du conteneur à obtenir. Avantageusement, la surface périphérique 205 comprend 2 ou 3 ouvertures borgnes 207 réparties régulièrement à la base de la tête 204. Avantageusement les ouvertures 207 borgnes sont disposées selon un même plan perpendiculaire à l'axe A2. L'ouverture borgne 207 présente préférentiellement un volume parallélépipédique mais toute autre forme peut être utilisée dans le cadre de la présente invention.

La surface périphérique 205 de la tête 204 comprend des portions mobiles 208 encadrées par de portions fixes 209. Les portions fixes 209 s'étendent depuis la base de la tête 204 et vont avantageusement former également la face supérieure 206 de la tête 204.

Chaque portion mobile 208 est disposée à l'aplomb d'une ouverture borgne 207 et va avantageusement former le bord supérieure et encore plus avantageusement tout ou partie des bords latéraux de celle-ci. La portion mobile 208 présente sur toute sa hauteur une largeur au moins équivalente à celle de l'ouverture borgne 207.

La portion mobile 208 peut se déplacer entre une première position, dite position avancée, où la portion mobile 208 est alignée avec le reste de ladite surface périphérique 209, et une position arrière où la portion mobile 208 est disposée en retrait de l'axe parallèle à l'axe A2 et passant par le fond de ladite ouverture borgne 207. Par souci de clarté, il est précisé qu'en position avancée, les portions mobiles 208 et les portions fixes 209 de la tête 204 sont alignées de sorte à former l'empreinte de la chambre 9 et les épaulements 12 du conteneur à obtenir. En position arrière, la portion de portion mobile 208 est disposée en retrait du fond de l'ouverture borgne 207 ce qui va permettre le dégagement axial du conteneur obtenu sans que les épaulements 12 soient retenus par le bord supérieur de l'ouverture borgne 207.

Le déplacement de ou des portions mobiles 208 est avantageusement guidé par au moins une ligne de guidage 210 (préférentiellement des rainures). Cette dernière est avantageusement disposée sur une face latérale de la portion mobile 208 et coopère avec un épaulement congruent présent sur la surface adjacente de la tête ou inversement.

Le déplacement radial des portions mobiles 208 de la surface périphérique 205 est généré par un noyau central 211. Celui-ci est disposé en tout ou partie à l'intérieur de la tête et peut se déplacer en translation, parallèlement à l'axe A2, entre une position haute et une position basse. Par souci de clarté il est précisé que les positions hautes et basses sont définies par rapport à l'élévation du noyau central 211 par rapport à la base de la tête 204.

La base 200 selon l'invention peut comprendre un ou plusieurs noyaux centraux 211. Par exemple, selon un premier mode de réalisation chaque noyau central 211 peut coopérer avec une seule portion mobile 208. Selon un deuxième mode de réalisation un seul noyau central 211 peut coopérer avec toutes les portions mobiles 208 de la tête.

Le mouvement dudit noyau central 211 de la position haute à la position basse entraîne le déplacement de la portion mobile 208 de la position avancée à la position arrière.

L'homme du métier est apte à envisager tous les moyens permettant d'associer le noyau central 211 à la portion mobile 208 de sorte à transformer le déplacement axial du noyau central 211 à un déplacement radial de la portion mobile 208. On peut notamment envisager des dispositifs comprenant des tringles ou des cames.

Selon un mode de réalisation préféré de l'invention, le noyau central 211 et la surface interne de la portion mobile 208 présentent chacune un pan incliné 212,213 en direction de l'extérieur de ladite base 200, par rapport à l'axe A2, en contact l'un avec l'autre et associés par une liaison glissière obtenue par un assemblage en queue d'aronde 214 entre les deux pans inclinés 212,213. Dans le cadre de la présente invention, les termes « internes » et « externes » sont choisis en référence à l'éloignement par rapport à l'axe A2.

En position haute, les deux pans inclinés 212, 213 présentent une surface de contact maximum. Lors du passage en position basse, le noyau central 211 glisse le long du pan incliné 212 de la surface interne de la portion mobile 208 et entraine cette dernière en direction de l'axe A2 jusqu'à sa position arrière. Le retour du noyau central 211 en position haute fait parcourir à la portion mobile 208 le trajet inverse.

En plus de son pan incliné 213, le noyau central 211 comprend un longeron 215 associé audit pan incliné 213 et s'étendant dans la tête 204 selon un axe parallèle à l'axe A2. Préférentiellement, ledit noyau central 211, et plus particulièrement ledit longeron 215 s'étend en deçà de la base de ladite tête à l'intérieur d'un canal 216. Ce dernier canal 216 est avantageusement formé à l'intérieur d'une pièce cylindrique 217 prolongeant la tête 204 en dessous de la paroi de moulage 202. Avantageusement, cette pièce cylindrique 216 est directement associée au châssis 400 de la base 200.

Par ailleurs, le noyau central 211 peut avantageusement comprendre au moins une aile 218 s'étendant radialement vers l'extérieur de la base 200. Préférentiellement, tout ou partie de ladite aile 218 déborde à l'extérieur de la pièce cylindrique 217 via une ouverture. Cette aile 21- va permettre l'interaction du noyau central 211 avec d'autres pièces de la base 200 selon l'invention et entraîner le déplacement de ce noyau central 211 entre sa position haute et sa position basse. Lorsque le noyau central 211 est en position basse, l'aile repose préférentiellement sur la face supérieure 401 du châssis 400.

Finalement, la base 200 selon l'invention peut comprendre également au moins un bouton poussoir 220, mobile en translation en direction de l'axe A2, associé audit noyau mobile 211 de telle sorte que le déplacement dudit bouton poussoir 220 en direction de l'axe A2 entraine le déplacement dudit noyau central 211 en position haute. L'homme du métier est apte à déterminer les moyens à mettre en oeuvre pour associer le bouton poussoir 220 au noyau central 211. Parmi ceux-ci, on peut notamment citer les tringles et les cames.

Préférentiellement, le bouton poussoir 220 et le noyau central 211 sont associés par une seconde liaison glissière réalisée via au moins une ligne de guidage 221 inclinée en direction dudit axe A2. On comprend ainsi que le déplacement radial du bouton poussoir 220 en direction de l'axe A2 va entrainer le déplacement du noyau central 211 en position haute.

Le bouton poussoir 211 possède avantageusement une face inférieure reposant sur la face supérieure 401 du châssis 400 et une extrémité libre débordant de la paroi périphérique 500 de la base 20 lorsque le noyau central 211 est en position basse. Par ailleurs, le bouton poussoir 220 comprend deux lames formant un espace intercalaire, ouvert à l'extrémité opposée à ladite extrémité libre, apte à recevoir tout ou partie de l'aile 218 du noyau central 211. Ces lames comprennent sur leur face interne au moins un moyen de guidage congruent à au moins un moyen de guidage présent sur la face externe du noyau central assurant la seconde liaison glissière. Ces moyens de guidage peuvent notamment prendre la forme de rainure et/ou d'épaulement. Alternativement, ledit bouton poussoir 220 peut comprendre une seule lame, s'étendant en direction de l'axe A2, et venant s'insérer entre deux ailes du noyau central 211.

Afin de permettre, le retour des éléments de la base 200 dans une position où le noyau central 211 est en position basse et la portion mobile 208 en position arrière, ladite base 200 comprend en outre un moyen élastique apte à déplacer le bouton poussoir 220 vers l'extérieur de la base. Ce moyen élastique peut prendre avantageusement la forme d'un ressort 222 placé entre une première butée 223 solidaire du bouton poussoir 220 et une deuxième butée 224 fixée au châssis. Le ressort 222 peut être maintenu en position par une tige 225 s'étendant à partir de la première butée 223.

Préférentiellement, les différents éléments de la base 200 selon l'invention peuvent comprendre chacun au moins un alésage formant au moins un canal traversant ces éléments et permettant de faire circuler un fluide apte à refroidir le moule lors de son utilisation.

Le moule selon l'invention comprend en outre des coquilles 300 dont la face interne comprend une empreinte en creux 301 destinée à former les parois du conteneur à obtenir. Par ailleurs, ces coquilles 300 comprennent également une zone congruente 302 à la zone annulaire de la face supérieure de la base et à la paroi périphérique 500 de la base 200.

Ces coquilles 300 sont montées mobiles latéralement autour de l'axe A2, entre une position ouverte et une position fermée. Ces deux coquilles 300 peuvent être libre l'une par rapport à l'autre ou préférentiellement associées par une liaison pivot, autour d'un axe A1 parallèle à l'axe A2.

En position fermée, les coquilles 300 viennent enserrer la base 200 selon l'invention, formant ainsi l'empreinte de l'ensemble du conteneur. Durant cette étape, les coquilles 300 prennent appui sur le bouton poussoir 220 ce qui entraine le passage du noyau central 211 en position haute et de la portion mobile en position avancée. Le soufflage de la préforme peut être initié et l'on obtient un conteneur comprenant notamment des épaulements 12 placés à l'intérieur des ouvertures borgnes 207.

Le passage des coquilles 300 de la position fermée à la position ouverte entraîne le déplacement des boutons poussoirs 220 vers l'extérieur, sous l'effet des moyens élastiques 222, et donc le retour du noyau central 211 en position basse et de la portion mobile 208 en position arrière. Ce faisant, le bord supérieur des ouvertures borgnes 207 ne bloque plus le déplacement axial du conteneur obtenu qui peut être séparé de la tête 204.

La présente invention concerne également un procédé de production d'un conteneur comprenant l'utilisation d'une base 300 ou d'un moule selon l'invention.

## Revendications

1. Base (200) pour moule, pour conteneur clipsable, comprenant sur sa face supérieure (201) une paroi de moulage (202), du fond du conteneur à obtenir, dont émerge une tête (204) s'étendant selon un axe longitudinal A2, ladite tête (204) comprend une surface périphérique (205) comprenant au moins une ouverture borgne (207), **caractérisée en ce que** la portion (208) de ladite surface périphérique (205) à l'aplomb de ladite ouverture borgne (207) est mobile entre une position avancée, où ladite portion est alignée avec le reste de ladite surface périphérique (205), et une position arrière où ladite portion (207) est disposée en retrait de l'axe parallèle à l'axe A2 et passant par le fond de ladite ouverture borgne (207) .

2. Base (200) pour moule, pour conteneur clipsable, selon la revendication précédente **caractérisée en ce que** ladite tête (204) a une forme cylindrique ou tronconique comprenant une surface périphérique (205) et une face supérieure (206).

3. Base (200) pour moule, pour conteneur clipsable, selon une des revendications précédentes **caractérisée en ce que** ladite tête (204) comprend au moins deux ouvertures borgnes (207), disposées selon un même plan perpendiculaire à l'axe A2, placées en vis-à-vis, à la base de ladite tête (204) .

4. Base (200) pour moule, pour conteneur clipsable, selon une des revendications précédentes **caractérisée en ce que** ladite tête (204) est creuse et contient tout ou partie d'un noyau central (211), mobile en translation parallèlement à l'axe A2, entre une position haute et une position basse, disposée de telle sorte que le mouvement dudit noyau central (211) de la position haute à la position basse entraîne le déplacement de ladite portion (208) à l'aplomb de ladite ouverture borgne (207) de la position avancée à la position arrière.

5. Base (200) pour moule, pour conteneur clipsable, selon une des revendications précédentes **caractérisée en ce que** la surface externe dudit noyau central (211) et la surface interne de ladite portion mobile (208) présentent chacune un pan incliné (212,213) en direction de l'extérieur de ladite base (200), par rapport à l'axe A2, en contact l'une avec l'autre et associées par une liaison glissière.

6. Base (200) pour moule, pour conteneur clipsable, selon une des revendications précédentes **caractérisée en ce que** ladite liaison glissière est réalisée par un assemblage en queue d'aronde (214).

7. Base (200) pour moule, pour conteneur clipsable, selon une des revendications précédentes **caractérisée en ce que** ledit noyau central (211) s'étend en deçà de la base de ladite tête (204) à l'intérieur d'un canal (216).

8. Base (200) pour moule, pour conteneur clipsable, selon une des revendications précédentes **caractérisée en ce qu'**elle comprend un bouton poussoir (220), mobile en translation en direction de l'axe A2, associé audit noyau central (211) de telle sorte que le déplacement dudit bouton poussoir (220) en direction de l'axe A2 entraine le déplacement dudit noyau mobile (211) en position haute.

9. Base (200) pour moule, pour conteneur clipsable, selon une des revendications précédentes **caractérisée en ce que** ledit bouton poussoir (220) et ledit noyau centrale (211) sont associés par une seconde liaison glissière.

10. Base (200) pour moule, pour conteneur clipsable, selon une des revendications précédentes **caractérisée** en ce ladite liaison glissière est réalisée via au moins une ligne de guidage (221) inclinée en direction dudit axe A2.

11. Base (200) pour moule, pour conteneur clipsable, selon une des revendications précédentes **caractérisée en ce que** ledit noyau central (211) présente des ailes (218) s'étendant vers l'extérieur dudit canal (216), lesdites ailes (218) étant associées par ladite liaison glissière audit bouton poussoir (220).

12. Base (200) pour moule, pour conteneur clipsable, selon une des revendications précédentes **caractérisée en ce que** l'extrémité libre dudit bouton poussoir (220) déborde de la périphérie du reste de ladite base (200).

13. Moule comprenant une base (200) selon l'une des revendications précédentes et des coquilles (300) montées mobiles latéralement autour dudit axe A2, entre une position ouverte et une position fermée, lesdites coquilles (300) comportant chacune une empreinte (301) en creux délimitant une partie de la paroi du conteneur à obtenir, **caractérisé en ce qu'**en position fermée lesdites coquilles (300) prennent appui sur ledit bouton poussoir (220).

14. Moule selon la revendication précédente **caractérisé en ce qu'**il comprend deux coquilles (300) montées pivotantes l'une par rapport à l'autre.

## Patentansprüche

1. Basis (200) für eine Form für einen aufsteckbaren Behälter, die auf ihrer Oberseite (201) eine Formungswand (202) des Bodens des zu erhaltenden Behälters umfasst, aus welcher ein Kopf (204) herausragt, der sich entlang einer Längsachse A2 erstreckt, wobei der Kopf (204) eine Umfangsfläche (205) umfasst, welche mindestens eine Blindöffnung (207) umfasst, **dadurch gekennzeichnet, dass** der Abschnitt (208) der Umfangsfläche (205) lotrecht zur Blindöffnung (207) zwischen einer ausgerückten Stellung, in der der Abschnitt mit dem Rest der Umfangsfläche (205) fluchtet, und einer hinteren Stellung beweglich ist, in der der Abschnitt (207) von der Achse zurückgezogen parallel zur Achse A2 und durch den Boden der Blindöffnung (207) hindurchgehend angeordnet ist.

2. Basis (200) für eine Form für einen aufsteckbaren Behälter nach dem vorstehenden Anspruch, **dadurch gekennzeichnet, dass** der Kopf (204) eine zylindrische oder kegelstumpfförmige Form aufweist, die eine Umfangsfläche (205) und eine Oberseite (206) umfasst.

3. Basis (200) für eine Form für einen aufsteckbaren Behälter nach einem der vorstehenden Ansprüche, **dadurch gekennzeichnet, dass** der Kopf (204) mindestens zwei Blindöffnungen (207) umfasst, die entlang einer selben Ebene senkrecht zur Achse A2 gegenüberliegend an der Basis des Kopfes (204) angeordnet sind.

4. Basis (200) für eine Form für einen aufsteckbaren Behälter nach einem der vorstehenden Ansprüche, **dadurch gekennzeichnet, dass** der Kopf (204) hohl ist und den gesamten oder einen Teil eines zentralen Kerns (211) enthält, der parallel zur Achse A2 zwischen einer oberen Stellung und einer unteren Stellung translationsbeweglich ist, derart angeordnet, dass die Bewegung des zentralen Kerns (211) von der oberen Stellung zur unteren Stellung die Verschiebung des Abschnitts (208) lotrecht zur Blindöffnung (207) von der ausgerückten Stellung zur hinteren Stellung bewirkt.

5. Basis (200) für eine Form für einen aufsteckbaren Behälter nach einem der vorstehenden Ansprüche, **dadurch gekennzeichnet, dass** die Außenfläche des zentralen Kerns (211) und die Innenfläche des beweglichen Abschnitts (208) jede eine in Bezug auf die Achse A2 in Richtung der Außenseite der Basis (200) geneigte Seitenfläche (212, 213) aufweisen, die miteinander in Kontakt stehen und über eine Gleitverbindung gekoppelt sind.

6. Basis (200) für eine Form für einen aufsteckbaren Behälter nach einem der vorstehenden Ansprüche, **dadurch gekennzeichnet, dass** die Gleitverbindung über einen Schwalbenschwanzverband (214) ausgeführt ist.

7. Basis (200) für eine Form für einen aufsteckbaren Behälter nach einem der vorstehenden Ansprüche, **dadurch gekennzeichnet, dass** sich der zentrale Kern (211) unterhalb der Basis des Kopfes (204) im Inneren eines Kanals (216) erstreckt.

8. Basis (200) für eine Form für einen aufsteckbaren Behälter nach einem der vorstehenden Ansprüche, **dadurch gekennzeichnet, dass** sie einen in Richtung der Achse A2 translationsbeweglichen Druckknopf (220) umfasst, der mit dem zentralen Kern (211) derart gekoppelt ist, dass die Verschiebung des Druckknopfs (220) in Richtung der Achse A2 die Verschiebung des beweglichen Kerns (211) in obere Stellung bewirkt.

9. Basis (200) für eine Form für einen aufsteckbaren Behälter nach einem der vorstehenden Ansprüche, **dadurch gekennzeichnet, dass** der Druckknopf (220) und der zentrale Kern (211) über eine zweite Gleitverbindung gekoppelt sind.

10. Basis (200) für eine Form für einen aufsteckbaren Behälter nach einem der vorstehenden Ansprüche, **dadurch gekennzeichnet, dass** die Gleitverbindung über mindestens eine Führungslinie (221) ausgeführt ist, welche in Richtung der Achse A2 geneigt ist.

11. Basis (200) für eine Form für einen aufsteckbaren Behälter nach einem der vorstehenden Ansprüche, **dadurch gekennzeichnet, dass** der zentrale Kern (211) Flügel (218) aufweist, die sich zur Außenseite des Kanals (216) hin erstrecken, wobei die Flügel (218) über die Gleitverbindung mit dem Druckknopf (220) gekoppelt sind.

12. Basis (200) für eine Form für einen aufsteckbaren Behälter nach einem der vorstehenden Ansprüche, **dadurch gekennzeichnet, dass** das freie Ende des Druckknopfs (220) über den Umfang des Restes der Basis (200) übersteht.

13. Form, welche eine Basis (200) nach einem der vorstehenden Ansprüche und Schalen (300) umfasst, die seitlich um die Achse A2 herum zwischen einer geöffneten Stellung und einer geschlossenen Stellung beweglich montiert sind, wobei die Schalen (300) jede einen Hohlabdruck (301) umfassen, der einen Teil der Wand des zu erhaltenden Behälters begrenzt, **dadurch gekennzeichnet, dass** die Schalen (300) in geschlossener Stellung am Druckknopf (220) anliegen.

14. Form nach dem vorstehenden Anspruch, **dadurch gekennzeichnet, dass** sie zwei Schalen (300) umfasst, die in Bezug zueinander schwenkend montiert sind.

## Claims

1. Base (200) for a mould, for a clippable container, comprising on the upper face (201) thereof, a wall (202) for moulding the bottom of the container to be obtained, from which a head (204) emerges extending along a longitudinal axis A2, said head (204) comprises a peripheral surface (205) comprising at least one blind opening (207), **characterised in that** the portion (208) of said peripheral surface (205) in line with said blind opening (207) can move between a forward position, where said portion is aligned with the rest of said peripheral surface (205), and a rear position where said portion (207) is set back from the axis parallel to the axis A2 and passing through the bottom of said blind opening (207).

2. Base (200) for a mould, for a clippable container, according to the preceding claim **characterised in that** said head (204) has a cylindrical or tapered shape comprising a peripheral surface (205) and an upper face (206).

3. Base (200) for a mould, for a clippable container, according to one of the preceding claims **characterised in that** said head (204) comprises at least two blind openings (207), arranged along the same plane perpendicular to the axis A2, positioned facing one another, at the base of said head (204).

4. Base (200) for a mould, for a clippable container, according to one of the preceding claims **characterised in that** said head (204) is hollow and contains all or part of a central core (211), movable in translation parallel to the axis A2, between a high position and a low position, arranged such that the movement of said central core (211) from the high position to the low position actuates the movement of said portion (208) in line with said blind opening (207) from the forward position to the rear position.

5. Base (200) for a mould, for a clippable container, according to one of the preceding claims **characterised in that** the external surface of said central core (211) and the internal surface of said mobile portion (208) each have an inclined side (212, 213) towards the exterior of said base (200), relative to the axis A2, in contact with one another and joined by a sliding link.

6. Base (200) for a mould, for a clippable container, according to one of the preceding claims **characterised in that** said sliding link is embodied by a dovetail assembly (214).

7. Base (200) for a mould, for a clippable container, according to one of the preceding claims **characterised in that** said central core (211) extends below the base of said head (204) inside a channel (216).

8. Base (200) for a mould, for a clippable container, according to one of the preceding claims **characterised in that** said base comprises a push-button (220), movable in translation towards the axis A2, associated with said central core (211) such that the movement of said push-button (220) towards the axis A2 actuates the movement of said central core (211) to the high position.

9. Base (200) for a mould, for a clippable container, according to one of the preceding claims **characterised in that** said push-button (220) and said central core (211) are joined by a second sliding link.

10. Base (200) for a mould, for a clippable container, according to one of the preceding claims **characterised in that** said sliding link is embodied via at least one inclined guiding line (221) towards said axis A2.

11. Base (200) for a mould, for a clippable container, according to one of the preceding claims **characterised in that** said central core (211) has wings (218) extending towards the exterior of said channel (216), said wings (218) being joined by said sliding link to said push-button (220).

12. Base (200) for a mould, for a clippable container, according to one of the preceding claims **characterised in that** the free end of said push-button (220) projects from the periphery of the rest of said base (200).

13. Mould comprising a base (200) according to one of the preceding claims and shells (300) laterally movably mounted about said axis A2, between an open position and a closed position, said shells (300) each comprising a hollow cavity (301) defining a portion of the wall of the container to be obtained, **characterised in that**, in the closed position, said shells (300) bear on said push-button (220).

14. Mould according to the preceding claim **characterised in that** it comprises two shells (300) pivotally mounted in relation to one another.
